# FASCICULE DE BREVET EUROPEEN

(11) **EP 2 712 746 B1**
(45) Date de publication et mention de la délivrance du brevet: **06.09.2017**
(21) Numéro de dépôt: 13185686.6
(22) Date de dépôt: 24.09.2013
(51) Int. Cl.: B60H 1/00, B60H 1/32, F25B 41/06

(54) **Procédé de régulation de la consommation du compresseur d'un circuit de climatisation de véhicule, et système associé**
Verfahren zur Verbrauchsregulierung des Kompressors eines Klimaanlagenkreislaufs eines Fahrzeugs, und entsprechendes System
Method for controlling the power consumption of the compressor of a vehicle air-conditioning circuit, and related system

(30) Priorité: 27.09.2012 FR 1259112
(43) Date de publication de la demande: 02.04.2014
(73) Titulaire: VALEO SYSTEMES THERMIQUES, 78320 Le Mesnil Saint-Denis (FR)
(72) Inventeur: Nacer-Bey, Moussa, 78990 Elancourt (FR); Aoun, Bernard, 75014 Paris (FR); Martinell, Amanda, 78640 Neauphle Le Chateau (FR)
(74) Mandataire: Metz, Gaëlle

(56) Documents cités:
- EP-A1- 2 386 810
- DE-A1-102008 050 163
- FR-A1- 2 793 309
- US-A- 5 392 612
- US-A1- 2004 154 324

## Description

L'invention concerne principalement un procédé de régulation de la consommation du compresseur d'un circuit de climatisation de véhicule automobile.

L'invention concerne également un système pour mettre en oeuvre un tel procédé ainsi qu'un circuit de climatisation intégrant ce système, et un véhicule automobile équipé d'au moins un tel circuit.

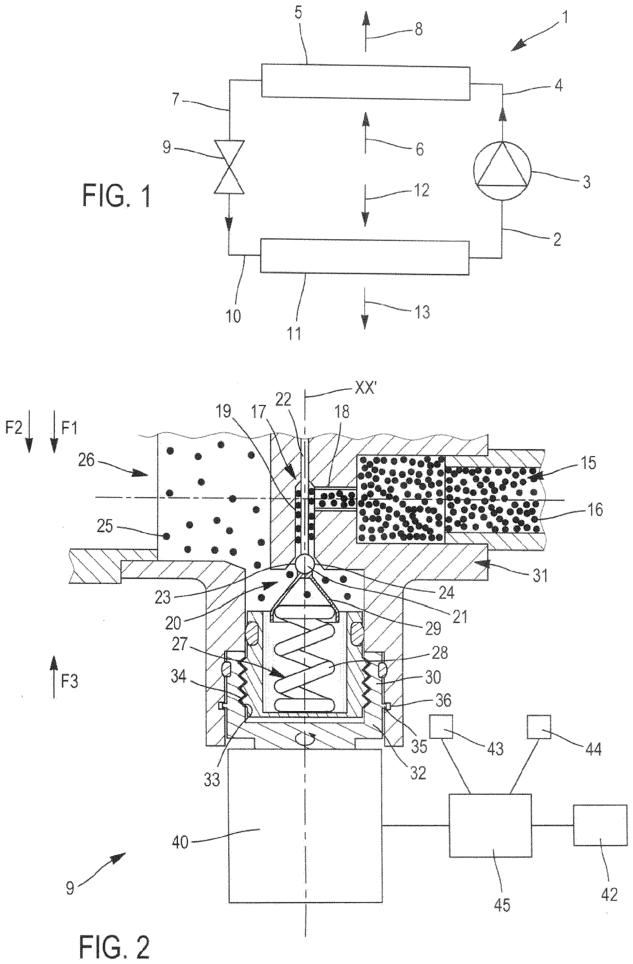

De façon connue et référence à la figure 1 qui représente schématiquement un circuit de climatisation 1 de l'art antérieur, tel que par exemple divulgué par FR 2793309 A1, le circuit de climatisation 1 d'un véhicule automobile fonctionne en boucle fermé.

Un gaz frigorigène basse pression 2 est comprimé dans un compresseur 3 qui envoie le gaz frigorigène haute pression 4 dans un condenseur 5. Le compresseur 3 peut être un compresseur mécanique à cylindrée variable ou un compresseur électrique.

Le condenseur 5 est soumis à un flux d'air froid 6, par exemple sous l'effet de la vitesse du véhicule, ce qui provoque de façon concomitante la transformation du gaz frigorigène haute pression 4 en fluide frigorigène haute pression 7 et le réchauffement du flux d'air froid 6 en flux d'air chaud 8.

Le fluide frigorigène haute pression 7 est ensuite soumis à un détendeur dénommé organe de détente 9 dans la suite du texte qui envoie le fluide frigorigène basse pression 10 dans un évaporateur 11.

L'évaporateur 11 est soumis à un flux d'air extérieur 12, ce qui provoque de façon concomitante l'évaporation du fluide frigorigène qui passe en phase gazeuse sous forme de gaz frigorigène basse pression 2, et le refroidissement du flux d'air extérieur 12 en un flux d'air froid 13 qui est envoyé dans l'habitacle du véhicule au moyen notamment d'aérateurs non représentés.

Lorsque la température extérieure au véhicule est faible, il est connu de réduire la consommation du compresseur en réduisant sa cylindrée dans le cas de l'utilisation d'un compresseur de type mécanique, ou sa vitesse de rotation dans le cas de l'utilisation d'un compresseur électrique.

Cette réduction de la consommation du compresseur entraîne la diminution du débit de circulation du fluide frigorigène 10 dans le circuit de climatisation 1 et en particulier dans l'évaporateur 11, ce qui provoque une inhomogénéité de la température à la surface de l'évaporateur 11 se traduisant par une température également non homogène de l'air de sortie des bouches d'aération de l'habitacle et caractérisée par un paramètre qui sera référencé DT dans la suite du texte. Pour éviter ce phénomène, la température DT à la surface de l'évaporateur 11 doit impérativement rester inférieure à 5 Kelvin et de préférence inférieure à 3 Kelvin.

Ainsi, selon l'art antérieur, lorsque la consommation du compresseur 3 est significativement réduite, la différence de température DT à la surface de l'évaporateur 11 croit jusqu'à dépasser la limite de 5 Kelvin.

Par ailleurs, une autre condition limite qui doit être respectée concerne la température T de l'air soufflé par l'évaporateur 11 qui doit être inférieure ou égale à 15°C. En effet, au delà de 15°C, la température d'air soufflé n'est plus suffisamment froide pour refroidir correctement l'habitacle.

Dans ce contexte, la présente invention vise un procédé de régulation de la consommation du compresseur d'un circuit de climatisation de véhicule automobile, le quel procédé permet de réduire la consommation du compresseur sans que la différence de température DT à la surface de l'évaporateur 11 ne soit supérieure à 5 Kelvin, et tout en assurant une température T d'air soufflé par l'évaporateur inférieure ou égale à 15°C.

A cet effet, le procédé de régulation de la consommation du compresseur d'un circuit de climatisation de véhicule automobile est essentiellement caractérisé en ce qu'il comprend au moins les étapes suivantes :
- contrôle simultané de la température (T) de l'air soufflé par l'évaporateur et de la différence de température (DT) à la surface de l'évaporateur,
- diminution du degré de détente de l'organe de détente (9) tant que la température (T) de l'air soufflé par l'évaporateur est inférieure ou égale à 15°C et que la différence de température (DT) à la surface de l'évaporateur est inférieure à 5 Kelvin, et
- réduction de la cylindrée du compresseur de type mécanique ou de la vitesse de rotation du compresseur de type électrique.

Ainsi, selon l'invention, la diminution du degré de détente de l'organe de détente permet de réduire la consommation du compresseur tout en respectant les conditions limites tenant à la différence de température DT à la surface de l'évaporateur et à la température T de l'air soufflé par l'évaporateur.

Le procédé de l'invention peut également comporter les caractéristiques optionnelles suivantes considérées isolément ou selon toutes les combinaisons techniques possibles :
- la diminution du degré de détente de l'organe de détente est commandée si la température extérieure au véhicule est inférieure à 30°C.
- la diminution du degré de détente de l'organe de détente est commandée tant que la différence de température à la surface de l'évaporateur est inférieure à 3 Kelvin.
- l'organe de détente comporte des moyens de détente dont une partie au moins est mobile en déterminant par sa position relative au corps fixe de l'organe de détente le degré de détente du fluide frigorigène, et des moyens de contrainte exerçant un effort de contrainte sur les moyens de détente en s'opposant à l'effort exercé par le fluide frigorigène haute pression et à un effort de contrainte exercé par une tige d'actionnement sur les moyens de détente, et la diminution du degré de détente de l'organe de détente consiste à diminuer l'effort de contrainte exercé par les moyens de contrainte sur les moyens de détente.
- les moyens de contrainte comportent un ressort exerçant par l'intermédiaire d'un support un effort de contrainte plus ou moins important sur une bille mobile formant partie des moyens de détente, laquelle bille mobile est ainsi apte à définir avec l'extrémité conique du conduit principal de circulation du fluide frigorigène haute pression un passage de détente plus ou moins important du dit fluide frigorigène, et la diminution du degré de détente de l'organe de détente consiste à diminuer la raideur du dit ressort.

L'invention porte également sur un système de régulation de la consommation du compresseur d'un circuit de climatisation de véhicule automobile mettant en oeuvre le procédé tel que précédemment défini et qui est essentiellement caractérisé en ce qu'il comporte un capteur de température de la température T de l'air soufflé par l'évaporateur, des capteurs pour mesurer la différence de température à la surface de l'évaporateur, les dits capteurs étant reliés à un organe de commande de la variation du degré de détente de l'organe de détente qui commande la diminution du degré de détente de l'organe de détente tant que la température de l'air soufflé par l'évaporateur est inférieure ou égale à 15°C et que la différence de température à la surface de l'évaporateur est inférieure ou égale à 5 Kelvin.

Le système de l'invention peut également comporter les caractéristiques optionnelles suivantes considérées isolément ou selon toutes les combinaisons techniques possibles :
- le système comporte un capteur de température de la température extérieure au véhicule qui est relié à l'organe de commande qui commande la diminution du degré de détente de l'organe de détente si la température extérieure au véhicule est inférieure à 30°C.
- l'organe de détente commande la diminution du degré de détente de l'organe de détente tant que la différence de température à la surface de l'évaporateur est inférieure ou égale à 3 Kelvin.
- l'organe de détente comporte des moyens de détente dont une partie au moins est mobile en déterminant par sa position relative au corps fixe de l'organe de détente le degré de détente du fluide frigorigène, et des moyens de contrainte exerçant un effort de contrainte sur les moyens de détente en s'opposant à l'effort exercé par le fluide frigorigène haute pression et à un effort de contrainte exercé par une tige d'actionnement sur les moyens de détente, et l'organe de commande de la variation du degré de détente de l'organe de détente comporte un actionneur électrique qui est apte à diminuer l'effort de contrainte exercé par les moyens de contrainte sur les moyens de détente lorsque l'organe de commande commande la diminution du degré de détente de l'organe de détente.
- les moyens de contrainte comportent un ressort exerçant par l'intermédiaire d'un support un effort de contrainte plus ou moins important sur une bille mobile formant partie des moyens de détente , laquelle bille mobile est ainsi apte à définir avec l'extrémité conique du conduit principal de circulation du fluide frigorigène haute pression un passage de détente plus ou moins important du dit fluide frigorigène, et l'actionneur électrique est apte à diminuer la raideur du dit ressort lorsque l'organe de commande commande la diminution du degré de détente de l'organe de détente. L'invention porte en outre sur un circuit de climatisation de véhicule automobile comportant un tel système de régulation et sur un véhicule automobile équipé d'au moins un tel circuit de climatisation.

D'autres caractéristiques et avantages de l'invention ressortiront clairement de la description qui en est donnée ci-dessous, à titre indicatif et nullement limitatif, en référence aux figures annexées parmi lesquelles :
- la figure 1 déjà décrite est une représentation schématique d'un circuit de climatisation de l'art antérieur de véhicule automobile,
- la figure 2 est une représentation schématique du système de régulation de l'invention impliquant notamment la commande de la diminution du degré de détente de l'organe de détente du circuit de climatisation,
- la figure 3 est un graphique rapportant des mesures prises avec un système de l'art antérieur et représentant la consommation du compresseur et la température T de l'air soufflé par l'évaporateur lorsque le véhicule est à l'arrêt et lorsqu'il est en mouvement à 50 kilomètres par heure et à 100 kilomètres par heure, et
- la figure 4 est un graphique rapportant des mesures prises avec le système de l'invention et représentant la consommation du compresseur et la température T de l'air soufflé par l'évaporateur lorsque le véhicule est à l'arrêt et lorsqu'il est en mouvement à 50 kilomètres par heure et à 100 kilomètres par heure.

En référence à la figure 2, l'organe de détente 9 comporte un canal d'entrée 15 du fluide frigorigène haute pression 16 provenant du condenseur non représenté sur cette figure.

Le fluide frigorigène haute pression 16 circule dans un canal de circulation 17 comportant un première conduit 18 coaxial au canal d'entrée 15 et un second conduit perpendiculaire 19.

La détente du fluide frigorigène haute pression 16 s'effectue à l'extrémité inférieure du second conduit 19 du canal de circulation 17 par des moyens de détente 20 comportant une bille mobile 21 soumise à une tige d'actionnement 22 qui s'étend dans le second conduit 19 et qui est reliée à un organe de détente thermostatique non représenté sur cette figure.

Les moyens de détente 20 incluent également l'extrémité conique 23 du second conduit 19 contre laquelle la bille 21 est apte à venir en appui de contact de sorte qu'aucune détente ne se produit dans l'organe de détente 9.

La détente s'effectue par l'abaissement vers le bas de la bille mobile 21 selon l'axe principal XX' sous l'effet de la tige d'actionnement 22 ce qui crée un passage de détente 24 du fluide frigorigène entre la bille 21 et les parois de l'extrémité conique 23.

Le fluide frigorigène basse pression 25 circule alors jusqu'à un canal de sortie 26 relié à l'évaporateur non représenté. La bille mobile 21 est ainsi soumise à la fois à l'effort F1 exercé par la tige d'actionnement 22 mais également à l'effort F2 du fluide frigorigène 16 circulant dans le second conduit 19 du canal de circulation 17, ces deux efforts F1,F2 étant tous les deux dirigés vers le bas selon l'axe longitudinal XX'.

La bille mobile 21 est également soumise à des moyens de contraintes 27 exerçant sur cette bille 21 un effort F3 opposé aux efforts F1 et F2 précédemment définis.

Ces moyens de contraintes comportent un ressort 28 situé sous la bille mobile 21 et qui est surmonté d'un support 29 par l'intermédiaire duquel le ressort 28 exerce sur la bille 21 l'effort F3 dirigé vers le haut selon l'axe longitudinal XX' en poussant la bille 21 vers les parois de l'extrémité conique 23.

Le ressort 28 est logé dans l'évidemment d'un boisseau 30 assemblé dans le corps 31 de l'organe de détente 9.

On comprend que la raideur du ressort 28 conditionne le degré de détente de l'organe de détente 9.

La raideur du ressort 28, et donc le degré de détente de l'organe de détente 9, est rendu modulable par les moyens suivants.

Le boisseau 30 est monté dans un réceptacle 32. A cet effet, la paroi périphérique extérieure du boisseau 30 comporte un filetage secondaire 33 qui coopère avec un filetage primaire 34 réalisé sur la paroi interne du réceptacle 32.

La paroi interne opposée du réceptacle comporte une nervure de guidage 35 qui coopère avec une rainure 36 réalisée dans l'alésage du corps 31 de l'organe de détente 9 dans lequel est monté le réceptacle 32. Ainsi, le réceptacle 32 et le corps 31 ne peuvent être rendus mobiles en translation selon l'axe longitudinal XX' puisqu'au regard de la coopération entre la nervure de guidage 35 et la rainure 36, seule une rotation du réceptacle 32 relativement au corps 31 est possible.

A cet effet, le système comporte un moteur électrique 40 formant actionneur électrique 40 qui est apte à entraîner en rotation dans un sens horaire ou antihoraire le réceptacle 32 qui, par son maintien longitudinal relativement au corps 31, entraîne le déplacement vers le haut ou vers le bas du boisseau 26 grâce aux filetages coopérant 33,34.

Le déplacement du boisseau 30 va agir sur la raideur du ressort 28 et donc sur le degré de détente de l'organe de détente 9. Selon le sens de rotation, l'augmentation de la raideur du ressort 28 va diminuer le passage de détente 24 et engendrer une augmentation du degré de détente. Au contraire, la diminution de la raideur du ressort 28 va augmenter le passage de détente 24 et entraîner une diminution du degré de détente de l'organe de détente 9.

Selon l'invention, le système comporte un premier capteur de température 42 qui relève la température extérieure du véhicule.

Le système de l'invention comporte également un second capteur de température 43 de la température T de l'air soufflé par l'évaporateur 11 et des capteurs 44 de la différence de température DT à la surface de l'évaporateur 11, ce système de capteurs 42,43,44 étant reliés à un organe de commande 45 apte à commander le moteur électrique 40 pour augmenter ou diminuer le degré de détente de l'organe de détente 9.

On décrit ci-après le procédé de l'invention.

Il est rappelé que deux conditions doivent être respectées. La première condition concerne la différence de température DT à la surface de l'évaporateur 11 qui doit être inférieure ou égale à 5 Kelvin, et la seconde condition concerne la température T de l'air soufflé par l'évaporateur 11 qui doit être inférieure au égale à 15°C.

Selon l'invention, la diminution du degré de détente est commandée lorsque la température extérieure du véhicule est inférieure à 30°C et que la température de l'air soufflé dans l'habitacle peut être diminuée tout en respectant le confort des occupants de l'habitacle. Il a été décrit précédemment en référence l'art antérieur que lorsque la cylindrée du compresseur de type mécanique ou la vitesse de rotation du compresseur de type électrique est réduite, le débit de circulation du fluide frigorigène est abaissé ce dont il résultait une inhomogénéité de la température DT à la surface de l'évaporateur 11.

Le procédé de l'invention, permet, en diminuant le degré de détente de l'organe de détente 9, de pouvoir diminuer plus encore la consommation du compresseur tout en ayant une différence de température DT à la surface de l'évaporateur 11 qui est inférieure ou égale à 5 Kelvin, et une température T de l'air soufflé par l'évaporateur 11 inférieure ou égale à 15°C

Pour ce faire, la diminution du degré de détente de l'organe de détente 9 est mise en oeuvre par le moteur électrique 40 qui va entraîner en rotation le réceptacle 32 entraînant lui-même la translation du boisseau 30, ce dont il résulte la diminution de la raideur du ressort et l'ouverture du passage de détente 24. La diminution du degré de détente permet de réduire la cylindrée du compresseur de type mécanique ou la vitesse de rotation du compresseur de type électrique et ainsi de diminuer la consommation du compresseur.

De façon concomitante, la température T de l'air soufflé par l'évaporateur 11 et la différence de température DT à la surface de l'évaporateur 11 sont contrôlées. Tant que la température T de l'air soufflé par l'évaporateur 11 est inférieure ou égale à 15°C et que la différence de température DT à la surface de l'évaporateur 11 est inférieure à 5 Kelvin, le système continue à commander la diminution du degré de détente de l'organe de détente 9. En revanche, si soit la température T de l'air soufflé par l'évaporateur 11, soit la différence de température DT à la surface de l'évaporateur 11 franchissent les conditions limites respectives de 15°C et de 5 Kelvin, l'organe de commande 45 commande l'arrêt de la diminution du degré de détente de l'organe de détente 9, voire, si nécessaire, l'augmentation du degré de détente.

Les résultats de la mise en oeuvre du procédé de l'invention confirment que l'ouverture du passage de détente 24 permet de pouvoir diminuer significativement la consommation du compresseur tout en respectant les conditions limites relatives à la température T de l'air soufflé par l'évaporateur 11 et à la différence de température DT à la surface de l'évaporateur 11.

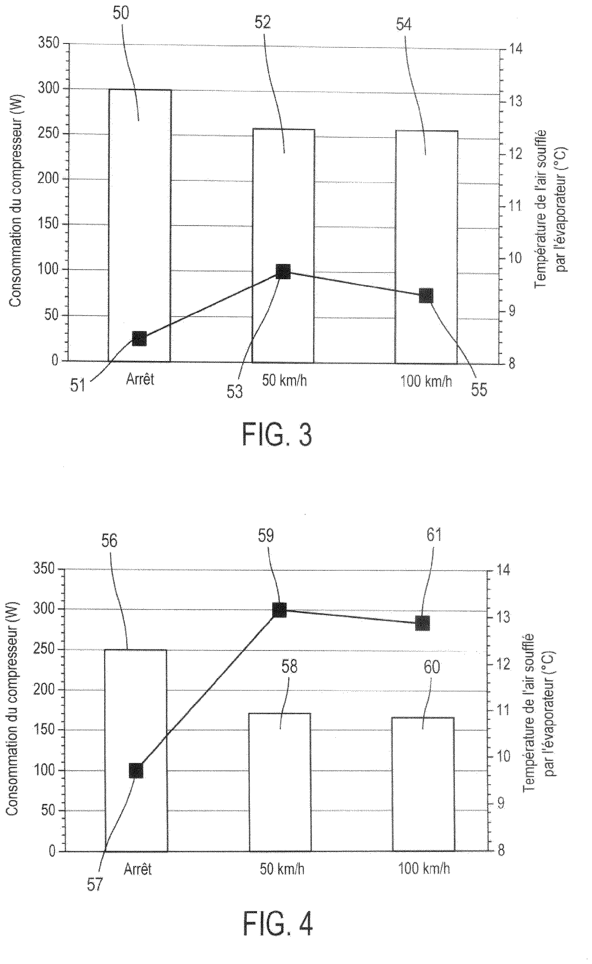

Ces résultats sont présentés en référence aux figures 3 et 4 pour lesquels un compresseur électrique est utilisé.

Sur la figure 3, le degré de détente de l'organe de détente 9 est déterminé de la façon suivante. La caractérisation du degré de détente de l'organe de détente s'effectue par l'emploi de deux valeurs. La première valeur se rapporte à la pression exprimée en Bars à la sortie de l'organe de détente 9 si ce dernier est plongé dans un bassin d'eau à 0°C et qu'il lui est appliqué une pression de 10,3 Bars. La seconde valeur se rapporte à la même pression de sortie dans les mêmes conditions que pour la première valeur sauf en ce que la température du bassin d'eau est de 10°C.

Ces deux valeurs définissent le degré de détente de l'organe de détente plus communément dénommé « the superheat setting » en terme anglophone.

Sur la figure 3, le degré de détente de l'organe de détente 9 est un degré de détente classiquement utilisé de 2,2- 2,9 bar, la valeur de 2,2 Bar se rapportant à la pression de sortie à 0°C sous 10,3 Bar et la valeur de 2,9 Bar se rapportant à la pression de sortie à 10°C sous 10,3 Bar.

Les résultats montrent que pour ce degré de détente, à l'arrêt du véhicule, la consommation 50 du compresseur électrique est de 300 Watts tandis que la température de l'air soufflé 51 par l'évaporateur est de 8,5 °C. Par ailleurs, dans ces conditions, la différence de température DT à la surface de l'évaporateur est de 2,6 Kelvin.

A 50 kilomètres par heure, la consommation 52 du compresseur électrique est de 260 Watts tandis que la température de l'air soufflé 51 par l'évaporateur est de 10°C. Par ailleurs, dans ces conditions, la différence de température DT à la surface de l'évaporateur est de 2,8 Kelvin.

A 100 kilomètres par heure, la consommation 54 du compresseur électrique est de 260 Watts également tandis que la température de l'air soufflé 51 par l'évaporateur est de 9,4 °C environ. Par ailleurs, dans ces conditions, la différence de température DT à la surface de l'évaporateur est de 2,8 Kelvin.

En référence à la figure 4 et selon l'invention, le degré de détente de l'organe de détente 9 a été augmenté et présente les valeurs de 2,5 - 3,2 la valeur de 2,5 Bar se rapportant à la pression de sortie à 0°C sous 10,3 Bar et la valeur de 3,2 Bar se rapportant à la pression de sortie à 10°C sous 10,3 Bar.

Les résultats montrent que pour ce degré de détente, à l'arrêt du véhicule, la consommation 56 du compresseur électrique est de 250 Watts tandis que la température de l'air soufflé 57 par l'évaporateur est de 9,7 °C environ. Par ailleurs, dans ces conditions, la différence de température DT à la surface de l'évaporateur est de 2,8 Kelvin.

A 50 kilomètres par heure, la consommation 58 du compresseur électrique est de 170 Watts tandis que la température de l'air soufflé 59 par l'évaporateur est de 13 °C. Par ailleurs, dans ces conditions, la différence de température DT à la surface de l'évaporateur est de 2,6 Kelvin.

A 100 kilomètres par heure, la consommation 60 du compresseur électrique est de 170 Watts également tandis que la température de l'air soufflé 61 par l'évaporateur est de 12,8 °C environ. Par ailleurs, dans ces conditions, la différence de température DT à la surface de l'évaporateur est de 2,5 Kelvin.

Il est à noter qu'à l'arrêt, en appliquant cette consommation de 250 Watts du compresseur électrique au degré de détente usuellement utilisé de 2,2-2,9 Bar, la différence de température DT à la surface de l'évaporateur serait de 5,1 Kelvin. Dans le même sens, à 50 kilomètres par heure et à 100 kilomètres par heure, en appliquant cette consommation de 170 Watts du compresseur électrique au degré de détente initialement utilisé usuellement utilisé de 2,2-2,9, la différence de température DT à la surface de l'évaporateur serait de 5,3 Kelvin à 50 kilomètres par heure et de 5,14 Kelvin à 100 kilomètres par heure.

On constate donc que selon l'invention, la diminution du degré de détente a permis de réduire la consommation du compresseur électrique d'environ 50 Watts à l'arrêt et d'environ 90 Watts à 50 kilomètres par heure et à 100 kilomètres par heure, tout en respectant les conditions limites tenant à la différence de température DT à la surface de l'évaporateur et à la température T de l'air soufflé par l'évaporateur.

## Revendications

1. Procédé de régulation de la consommation du compresseur d'un circuit de climatisation de véhicule automobile comportant un organe de détente qui abaisse la pression du fluide frigorigène à l'entrée de l'évaporateur, **caractérisé en ce qu'**il comprend au moins les étapes suivantes :
- contrôle simultané de la température (T) de l'air soufflé par l'évaporateur (11) et de la différence de température (DT) à la surface de l'évaporateur (11),
- diminution du degré de détente de l'organe de détente (9) tant que la température (T) de l'air soufflé par l'évaporateur (11) est inférieure ou égale à 15°C et que la différence de température (DT) à la surface de l'évaporateur (11) est inférieure à 5 Kelvin, et
- réduction de la cylindrée du compresseur de type mécanique ou de la vitesse de rotation du compresseur de type électrique.

2. Procédé selon la revendication 1, **caractérisé en ce que** la diminution du degré de détente de l'organe de détente (9) est commandée si la température extérieure au véhicule est inférieure à 30°C.

3. Procédé selon l'une quelconque des revendications 1 et 2, **caractérisé en ce que** la diminution du degré de détente de l'organe de détente (9) est commandée tant que la différence de température (DT) à la surface de l'évaporateur (11) est inférieure à 3 Kelvin.

4. Procédé selon l'une quelconque des revendications 2 et 3, caractérisé en ce l'organe de détente (9) comporte des moyens de détente (20) dont une partie (21) au moins est mobile en déterminant par sa position relative au corps fixe (31) de l'organe de détente (9) le degré de détente du fluide frigorigène, et des moyens de contrainte (27) exerçant un effort de contrainte (F3) sur les moyens de détente (20) en s'opposant à l'effort exercé (F1) par le fluide frigorigène haute pression (16) et à un effort de contrainte (F2) exercé par une tige d'actionnement (22) sur les moyens de détente (20), et en ce que la diminution du degré de détente de l'organe de détente (9) consiste à diminuer l'effort de contrainte (F3) exercé par les moyens de contrainte (27) sur les moyens de détente (20).

5. Procédé selon la revendication 4, **caractérisé en ce que** les moyens de contrainte (27) comportent un ressort (28) exerçant par l'intermédiaire d'un support (29) un effort de contrainte (F3) plus ou moins important sur une bille mobile (21) formant partie des moyens de détente (20), laquelle bille mobile (21) est ainsi apte à définir avec l'extrémité conique (23) du conduit principal de circulation (17) du fluide frigorigène haute pression (16) un passage de détente (24) plus ou moins important du dit fluide frigorigène (16), et **en ce que** la diminution du degré de détente de l'organe de détente (9) consiste à diminuer la raideur du dit ressort (28).

6. Système de régulation de la consommation du compresseur d'un circuit de climatisation de véhicule automobile pour mettre en oeuvre le procédé selon l'une quelconque des revendications 1 à 5, lequel circuit de climatisation comporte notamment un organe de détente abaissant la pression du fluide frigorigène à l'entrée de l'évaporateur, et un capteur de température (43) de la température T de l'air soufflé par l'évaporateur (11), **caractérisé en ce qu'**il comporte des capteurs (44) de la différence de température (DT) à la surface de l'évaporateur (11), les dits capteurs (43,44) étant reliés à un organe de commande (45) de la variation du degré de détente de l'organe de détente (9) qui commande la diminution du degré de détente de l'organe de détente (9) tant que la température (T) de l'air soufflé par l'évaporateur (11) est inférieure ou égale à 15°C et que la différence de température (DT) à la surface de l'évaporateur (11) est inférieure ou égale à 5 Kelvin.

7. Système selon la revendication 6, **caractérisé en ce qu'**il comporte un capteur de température (42) de la température extérieure au véhicule qui est relié à l'organe de commande (45) qui commande la diminution du degré de détente de l'organe de détente (9) si la température extérieure au véhicule est inférieure à 30°C.

8. Système selon l'une quelconque des revendications 6 et 7, **caractérisé en ce que** l'organe de détente (9) commande la diminution du degré de détente de l'organe de détente (9) tant que la différence de température (DT) à la surface de l'évaporateur (11) est inférieure ou égale à 3 Kelvin.

9. Système selon l'une quelconque des revendications 6 à 8, **caractérisé en ce que** l'organe de détente (9) comporte des moyens de détente (20) dont une partie (21) au moins est mobile en déterminant par sa position relative au corps fixe (31) de l'organe de détente (9) le degré de détente du fluide frigorigène, et des moyens de contrainte (27) exerçant un effort de contrainte (F3) sur les moyens de détente (20) en s'opposant à l'effort (F1) exercé par le fluide frigorigène haute pression (16) et à un effort de contrainte (F2) exercé par une tige d'actionnement (22) sur les moyens de détente (20), et **en ce que** l'organe de commande (45) de la variation du degré de détente de l'organe de détente (9) comporte un actionneur électrique (40) qui est apte à diminuer l'effort de contrainte (F3) exercé par les moyens de contrainte (27) sur les moyens de détente (20) lorsque l'organe de commande (45) commande la diminution du degré de détente de l'organe de détente (9).

10. Système selon la revendication 9, **caractérisé en ce que** les moyens de contrainte (27) comportent un ressort (28) exerçant par l'intermédiaire d'une support (29) un effort de contrainte (F3) plus ou moins important sur une bille mobile (21) formant partie des moyens de détente (20), laquelle bille mobile (21) est ainsi apte à définir avec l'extrémité conique (23) du conduit principal (17) de circulation du fluide frigorigène haute pression (16) un passage de détente (24) plus ou moins important du dit fluide frigorigène (16), et **en ce que** l'actionneur électrique (40) est apte à diminuer la raideur du dit ressort (28) lorsque l'organe de commande (45) commande la diminution du degré de détente de l'organe de détente (9).

11. Circuit de climatisation d'un véhicule notamment automobile, **caractérisé en ce qu'**il comporte un système de régulation de la consommation du compresseur d'un circuit de climatisation d'un véhicule notamment automobile soumis à un faible débit de circulation du fluide frigorigène selon les revendications 6 à 10.

12. Véhicule automobile muni d'au moins un circuit de climatisation selon la revendication 11.

## Patentansprüche

1. Verfahren zur Regelung des Verbrauchs des Kompressors eines Klimatisierungskreislaufs eines Kraftfahrzeugs, der ein Expansionsorgan aufweist, das den Druck des Kältemittels am Eingang des Verdampfers senkt, **dadurch gekennzeichnet, dass** es mindestens die folgenden Schritte enthält:
- gleichzeitige Kontrolle der Temperatur (T) der vom Verdampfer (11) geblasenen Luft und des Temperaturunterschieds (DT) an der Oberfläche des Verdampfers (11),
- Verringerung des Expansionsgrads des Expansionsorgans (9), so lange die Temperatur (T) der vom Verdampfer (11) geblasenen Luft niedriger als oder gleich 15°C und der Temperaturunterschied (DT) an der Oberfläche des Verdampfers (11) niedriger als 5 Kelvin ist, und
- Reduzierung der Fördermenge des Kompressors auf mechanische Art oder der Drehgeschwindigkeit des Kompressors auf elektrische Art.

2. Verfahren nach Anspruch 1, **dadurch gekennzeichnet, dass** die Verringerung des Expansionsgrads des Expansionsorgans (9) gesteuert wird, wenn die Temperatur außerhalb des Fahrzeugs niedriger als 30°C ist.

3. Verfahren nach einem der Ansprüche 1 und 2, **dadurch gekennzeichnet, dass** die Verringerung des Expansionsgrads des Expansionsorgans (9) so lange gesteuert wird, wie der Temperaturunterschied (DT) an der Oberfläche des Verdampfers (11) niedriger als 3 Kelvin ist.

4. Verfahren nach einem der Ansprüche 2 und 3, **dadurch gekennzeichnet, dass** das Expansionsorgan (9) Expansionseinrichtungen (20), von denen mindestens ein Teil (21) beweglich ist, indem er durch seine Stellung bezüglich des ortsfesten Körpers (31) des Expansionsorgans (9) den Expansionsgrad des Kältemittels bestimmt, und Beanspruchungseinrichtungen (27) aufweist, die eine Beanspruchungskraft (F3) auf die Expansionseinrichtungen (20) ausüben, indem sie der vom Hochdruck-Kältemittel (16) ausgeübten Kraft (F1) und einer von einer Betätigungsstange (22) auf die Expansionseinrichtungen (20) ausgeübten Beanspruchungskraft (F2) entgegenwirken, und dass die Verringerung des Expansionsgrads des Expansionsorgans (9) darin besteht, die von den Beanspruchungseinrichtungen (27) auf die Expansionseinrichtungen (20) ausgeübte Beanspruchungskraft (F3) zu verringern.

5. Verfahren nach Anspruch 4, **dadurch gekennzeichnet, dass** die Beanspruchungseinrichtungen (27) eine Feder (28) aufweisen, die über einen Träger (29) eine mehr oder weniger große Beanspruchungskraft (F3) auf eine bewegliche Kugel (21) ausübt, die Teil der Expansionseinrichtungen (20) ist, wobei die bewegliche Kugel (21) so mit dem kegelförmigen Ende (23) der Hauptkreislaufleitung (17) des Hochdruck-Kältemittels (16) einen mehr oder weniger großen Expansionsdurchgang (24) des Kältemittels (16) definieren kann, und dass die Verringerung des Expansionsgrads des Expansionsorgans (9) darin besteht, die Steifheit der Feder (28) zu verringern.

6. System zur Regelung des Verbrauchs des Kompressors eines Klimatisierungskreislaufs eines Kraftfahrzeugs zur Durchführung des Verfahrens nach einem der Ansprüche 1 bis 5, wobei der Klimatisierungskreislauf insbesondere ein Expansionsorgan, das den Druck des Kältemittels am Eingang des Verdampfers senkt, und einen Temperaturfühler (43) der Temperatur T der vom Verdampfer (11) geblasenen Luft aufweist, **dadurch gekennzeichnet, dass** es Fühler (44) des Temperaturunterschieds (DT) an der Oberfläche des Verdampfers (11) aufweist, wobei die Fühler (43, 44) mit einem Steuerorgan (45) der Änderung des Expansionsgrads des Expansionsorgans (9) verbunden sind, das die Verringerung des Expansionsgrads des Expansionsorgans (9) steuert, so lange die Temperatur (T) der vom Verdampfer (11) geblasenen Luft niedriger als oder gleich 15°C und der Temperaturunterschied (DT) an der Oberfläche des Verdampfers (11) niedriger als oder gleich 5 Kelvin ist.

7. System nach Anspruch 6, **dadurch gekennzeichnet, dass** es einen Temperaturfühler (42) der Temperatur außerhalb des Fahrzeugs aufweist, der mit dem Steuerorgan (45) verbunden ist, das die Verringerung des Expansionsgrads des Expansionsorgans (9) steuert, wenn die Temperatur außerhalb des Fahrzeugs niedriger als 30°C ist.

8. System nach einem der Ansprüche 6 und 7, **dadurch gekennzeichnet, dass** das Expansionsorgan (9) die Verringerung des Expansionsgrads des Expansionsorgans (9) steuert, so lange der Temperaturunterschied (DT) an der Oberfläche des Verdampfers (11) niedriger als oder gleich 3 Kelvin ist.

9. System nach einem der Ansprüche 6 bis 8, **dadurch gekennzeichnet, dass** das Expansionsorgan (9) Expansionseinrichtungen (20), von denen mindestens ein Teil (21) beweglich ist, indem er durch seine Stellung bezüglich des ortsfesten Körpers (31) des Expansionsorgans (9) den Expansionsgrad des Kältemittels bestimmt, und Beanspruchungseinrichtungen (27) aufweist, die eine Beanspruchungskraft (F3) auf die Expansionseinrichtungen (20) ausüben, indem sie der vom Hochdruck-Kältemittel (16) ausgeübten Kraft (F1) und einer von einer Betätigungsstange (22) auf die Expansionseinrichtungen (20) ausgeübten Beanspruchungskraft (F2) entgegenwirken, und dass das Steuerorgan (45) der Änderung des Expansionsgrads des Expansionsorgans (9) ein elektrisches Stellglied (40) aufweist, das die von den Beanspruchungseinrichtungen (27) auf die Expansionseinrichtungen (20) ausgeübte Beanspruchungskraft (F3) verringern kann, wenn das Steuerorgan (45) die Verringerung des Expansionsgrads des Expansionsorgans (9) steuert.

10. System nach Anspruch 9, **dadurch gekennzeichnet, dass** die Beanspruchungseinrichtungen (27) eine Feder (28) aufweisen, die mittels eines Trägers (29) eine mehr oder weniger große Beanspruchungskraft (F3) auf eine bewegliche Kugel (21) ausübt, die Teil der Expansionseinrichtungen (20) ist, wobei die bewegliche Kugel (21) so mit dem kegelförmigen Ende (23) des Hauptkreislaufkanals (17) des Hochdruck-Kältemittels (16) einen mehr oder weniger großen Expansionsdurchgang (24) des Kältemittels (16) definieren kann, und dass das elektrische Stellglied (40) die Steifheit der Feder (28) verringern kann, wenn das Steuerorgan (45) die Verringerung des Expansionsgrads des Expansionsorgans (9) steuert.

11. Klimatisierungskreislauf insbesondere eines Kraftfahrzeugs, **dadurch gekennzeichnet, dass** er ein System zur Regelung des Verbrauchs des Kompressors eines Klimatisierungskreislaufs insbesondere eines Kraftfahrzeugs aufweist, der einem geringen Kreislaufdurchsatz des Kältemittels nach den Ansprüchen 6 bis 10 ausgesetzt ist.

12. Kraftfahrzeug, das mit mindestens einem Klimatisierungskreislauf nach Anspruch 11 ausgestattet ist.

## Claims

1. Method for regulating the consumption of the compressor of a motor vehicle air conditioning circuit comprising an expansion member which lowers the pressure of the refrigerant fluid at the inlet of the evaporator, **characterized in that** it comprises at least the following steps:
- simultaneous checking of the temperature (T) of the air blown through the evaporator (11) and of the temperature difference (DT) at the surface of the evaporator (11),
- reduction in the degree of expansion of the expansion member (9) as long as the temperature (T) of the air blown through the evaporator (11) is less than or equal to 15ºC and the temperature difference (DT) at the surface of the evaporator (11) is less than 5 Kelvin, and
- reduction of the swept volume of the compressor if of mechanical type or of the rotational speed of the compressor if of electrical type.

2. Method according to Claim 1, **characterized in that** the reduction in the degree of expansion of the expansion member (9) is commanded if the temperature outside the vehicle is below 30°C.

3. Method according to either one of Claims 1 and 2, **characterized in that** the reduction in the degree of expansion of the expansion member (9) is commanded as long as the temperature difference (DT) at the surface of the evaporator (11) is less than 3 Kelvin.

4. Method according to either one of Claims 2 and 3, **characterized in that** the expansion member (9) comprises expansion means (20) at least part (21) of which is mobile, its positon relative to the fixed body (31) of the expansion member (9) determining the degree of expansion of the refrigerant fluid, and constraining means (27) exerting a constraining force (F3) on the expansion means (20) by opposing the force (F1) exerted by the high-pressure refrigerant fluid (16) and opposing a constraining force (F2) exerted on the expansion means (20) by an actuating rod (22), and **in that** the reduction in the degree of expansion of the expansion member (9) consists in reducing the constraining force (F3) exerted by the constraining means (27) on the expansion means (20).

5. Method according to Claim 4, **characterized in that** the constraining means (27) comprise a spring (28) which, by means of a support (29), exerts a greater or lesser constraining force (F3) on a mobile ball (21) that forms part of the expansion means (20), which mobile ball (21) is thus able, with the conical end (23) of the main pipe (17) through which the high-pressure refrigerant fluid (16) circulates, to define a greater or lesser expansion passage (24) for the said refrigerant fluid (16), and **in that** the reduction in the degree of expansion of the expansion member (9) consists in reducing the stiffness of the said spring (28) .

6. System for regulating the consumption of the compressor of a motor vehicle air conditioning circuit in order to implement the method according to any one of Claims 1 to 5, which air conditioning circuit notably comprises an expansion member that lowers the pressure of the refrigerant fluid at the inlet of the evaporator, and a temperature sensor (43) that senses the temperature T of the air blown through the evaporator (11), **characterized in that** it comprises sensors (44) that sense the temperature difference (DT) at the surface of the evaporator (11), the said sensors (43, 44) being connected to a control member (45) that controls the variation in the degree of expansion of the expansion member (9) and which commands the reduction in the degree of expansion of the expansion member (9) as long as the temperature (T) of the air blown through the evaporator (11) is less than or equal to 15ºC and as long as the temperature difference (DT) at the surface of the evaporator (11) is less than or equal to 5 Kelvin.

7. System according to Claim 6, **characterized in that** it comprises a temperature sensor (42) that senses the temperature outside the vehicle and that is connected to the control member (45) which commands the reduction in the degree of expansion of the expansion member (9) if the temperature outside the vehicle is below 30ºC.

8. System according to either one of Claims 6 and 7, **characterized in that** the expansion member (9) commands the reduction in the degree of expansion of the expansion member (9) as long as the temperature difference (DT) at the surface of the evaporator (11) is less than or equal to 3 Kelvin.

9. System according to any one of Claims 6 to 8, **characterized in that** the expansion member (9) comprises expansion means (20) at least part (21) of which is mobile, its positon relative to the fixed body (31) of the expansion member (9) determining the degree of expansion of the refrigerant fluid, and constraining means (27) exerting a constraining force (F3) on the expansion means (20) by opposing the force (F1) exerted by the high-pressure refrigerant fluid (16) and opposing a constraining force (F2) exerted on the expansion means (20) by an actuating rod (22), and **in that** the control member (45) controlling the variation in the degree of expansion of the expansion member (9) comprises an electric actuator (40) which is able to reduce the constraining force (F3) exerted by the constraining means (27) on the expansion means (20) when the control member (45) is commanding the reduction in the degree of expansion of the expansion member (9).

10. System according to Claim 9, **characterized in that** the constraining means (27) comprise a spring (28) which, by means of a support (29), exerts a greater or lesser constraining force (F3) on a mobile ball (21) that forms part of the expansion means (20), which mobile ball (21) is thus able, with the conical end (23) of the main pipe (17) through which the high-pressure refrigerant fluid (16) circulates, to define a greater or lesser expansion passage (24) for the said refrigerant fluid (16), and **in that** the electric actuator (40) is able to reduce the stiffness of the said spring (28) when the control member (45) is commanding a reduction in the degree of expansion as the expansion member (9).

11. Air conditioning circuit for a vehicle, notably a motor vehicle, **characterized in that** it comprises a system for regulating the consumption of the compressor of an air conditioning circuit of a vehicle, notably motor vehicle, subjected to a low flow rate of circulating refrigerant fluid according to Claims 6 to 10.

12. Motor vehicle equipped with at least one air conditioning circuit according to Claim 11.
